# EUROPÄISCHE PATENTSCHRIFT

(11) **EP 2 192 966 B1**
(45) Veröffentlichungstag und Bekanntmachung des Hinweises auf die Patenterteilung: **29.11.2017**
(21) Anmeldenummer: 08785009.5
(22) Anmeldetag: 24.07.2008
(51) Int. Cl.: B01D 29/96

(54) **FILTERVORRICHTUNG UND FILTERELEMENT**
FILTER DEVICE AND FILTER ELEMENT
DISPOSITIF DE FILTRATION ET ÉLÉMENT FILTRANT

(30) Priorität: 27.09.2007 DE 102007046209
(43) Veröffentlichungstag der Anmeldung: 09.06.2010
(73) Patentinhaber: Hydac Filtertechnik GmbH, 66273 Sulzbach/Saar (DE)
(72) Erfinder: SAKRASCHINSKY, Michael, 66386 St. Ingbert (DE); SANN, Norbert, 66292 Riegelsberg (DE)
(74) Vertreter: Bartels, Martin Erich Arthur
(86) Internationale Anmeldenummer: PCT/EP2008/006056
(87) Internationale Veröffentlichungsnummer: WO 2009/043403

(56) Entgegenhaltungen:
- EP-A- 0 844 012
- WO-A-97/16235
- WO-A-2008/068237
- DE-U1- 20 011 003
- US-A- 4 721 563
- US-A1- 2003 226 800
- US-B1- 6 308 836

## Beschreibung

Die Erfindung betrifft ein Filterelement und eine Filtervorrichtung mit dem Filterelement, das einen sich entlang einer Längsachse erstreckenden Körper bildet und in einem Gehäuse aufnehmbar ist, das mittels eines Deckelteiles verschließbar ist, wobei eine Dichtungsanordnung zur Bildung einer fluiddichten Abdichtung zwischen Gehäuse und Deckelteil vorgesehen ist. Filtervorrichtungen zur Aufnahme von Filterelementen sind in einer Vielzahl von Ausführungsformen auf dem Markt frei erhältlich, vgl. beispielsweise EP 1 287 871 A1 oder EP 0 891 214 B1. Beim Betrieb derartiger Filtervorrichtungen muß in bestimmten Zeitabständen ein Wechsel des Filterelementes vorgenommen werden, was in verhältnismäßig kurzen Zeitabständen geschehen muß, wenn große zu filtrierende Volumenströme anfallen und/oder es sich um stärker verschmutzte Fluide handelt. Bei derartigen Filtervorrichtungen ist daher eine Bauweise anzustreben, bei der sich die Montagevorgänge für das Auswechseln von Filterelementen einfach und unkompliziert gestalten, dass andererseits jedoch hierbei jeweils eine sichere Abdichtung zwischen Gehäuse und Deckelteil zustande kommt, selbst bei hohem Druckniveau. Um dies zu gewährleisten, muß bei jedem Wechselvorgang darauf geachtet werden, dass die Dichtungsanordnung zwischen Deckelteil und Gehäuse vorschriftsgemäß eingebaut wird, wobei das Augenmerk nicht nur darauf gerichtet werden muß, dass ein entsprechendes Dichtelement richtig plaziert wird, sondern auch darauf zu achten ist, dass ein Dichtelement des vorgesehenen Typs mit richtiger Abmessung eingelegt wird. Falls beim Elementwechsel der Einbau des Dichtelements vergessen wird, besteht die Gefahr der Betriebsstörung, verbunden mit einer Verschmutzung der Umwelt.

Aus der US-B1-6 308 836 B1 ist eine Filtervorrichtung für in einem Motorblock oder in einer Hydraulikeinrichtung zirkulierende Flüssigkeit bekannt, bei der ein Filterelement in ein Gehäuse einsetzbar ist. Durch Verspannen eines Deckelteiles mit dem Gehäuse ist das Filterelement in dem Gehäuse festlegbar und eine Endkappe des Filterelements ist mit einer integrierten Umfangsdichtung versehen, welche beim Verspannen des Deckelteiles mit dem Gehäuse eine Abdichtung zwischen dem Gehäuse und dem Deckelteil bewirkt. Innerhalb der Endkappe sind hierfür schlitzartige Durchbrechungen eingebracht, die zum einen der Fluidführung dienen und zum anderen eine federnd elastische Anlage der Umfangsdichtung erlauben, um dergestalt eine möglichst sichere Abdichtung gewährleisten zu können.

Aus der WO 97/16235 A ist eine Filtervorrichtung mit einem rohrförmigen Filterelement bekannt, das an seinen beiden Enden jeweils eine Endkappe aufweist, das in einem Gehäuse aufnehmbar ist, das mittels eines Deckelteils verschließbar ist. Eine erste Endkappe trägt eine elastische Dichtung an ihrem Umfang und weist mindestens einen Fluiddurchlass für das Bilden einer Fluidstrecke durch die erste Endkappe zu einer radial äußeren Fläche des Filterelements auf. Die Dichtung ist hierbei in einer umlaufenden Nut im äußeren Umfangsrand der ersten Endkappe aufgenommen und ist für die fluiddichte Abdichtung zwischen Gehäuse und Deckelteil vorgesehen. Der mindestens eine schlitzförmig in die scheibenförmige Endkappe eingeschnittene Fluiddurchlass ist an einer radialen Position zwischen dem Umfangsrand der Endkappe und dem Umfangsrand des Filterelements vorgesehen. Im Hinblick auf einen kompakten Aufbau, bei dem der Durchmesser des Gehäuses nur geringfügig über dem Außendurchmesser des Filterelements liegt, ergibt sich daher nur eine geringe radiale Ausdehnung des in Umfangsrichtung angeordneten Schlitzes und so ist bei dieser Lösung mit einer nicht unbeachtlichen Behinderung des Strömungsweges durch den dahingehenden Fluiddurchlass zu rechnen.

Im Hinblick auf diese Problematik stellt sich die Erfindung die Aufgabe, ein Filterelement und eine Filtervorrichtung zur Verfügung zu stellen, bei der der Vorgang des Filterelementwechsels besonders einfach und sicher durchführbar ist und bei der ein verhältnismäßig ungehinderter Störungsweg für den Fluideintritt vom Deckelteil in den Innenraum des Gehäuses sichergestellt ist.

Erfindungsgemäß ist diese Aufgabe durch ein Filterelement gelöst, die die Merkmale des Patentanspruches 1 in seiner Gesamtheit aufweist.

Gegenstand der Erfindung ist auch eine Filtervorrichtung mit einem Filterelement gemäß einem der Ansprüche 1 bis 4, wobei die Filtervorrichtung die Merkmale des Patentanspruchs 5 in seiner Gesamtheit aufweist.

Dadurch dass gemäß dem kennzeichnenden Teil des Anspruches 1 der den Dichtungsträger bildende, bezogen auf die Längsachse radial vom zentralen Teil der Endkappe abgesetzte ringförmige Umfangsteil über radial verlaufende Stege mit dem zentralen Teil der Endkappe verbunden ist, dass die radial verlaufenden Stege an den zentralen Teil der Endkappe einstückig angeformt sind, und dass die Zwischenräume zwischen den Stegen im Betriebszustand der Vorrichtung die Fluiddurchlässe bilden, verbleibt ein verhältnismäßig ungehinderter Strömungsweg für den Fluideintritt vom Deckelteil in den Innenraum des Gehäuses, da der Dichtungsträger mit dem Zentralbereich der betreffenden Endkappe lediglich über radiale Stege in Verbindung ist.

Die Endkappe weist die Fluiddurchlässe zwischen einer Fluidführung im Deckelteil und der Außenseite des Filterelements auf.

Dadurch, dass die Dichtungsanordnung als Bestandteil des Filterelementes an einem mit diesem fest verbundenen Dichtungsträger festgelegt ist, sind bei Montagevorgängen für den Filterelementwechsel die vorstehend erwähnten Fehlerquellen mit Sicherheit vermieden. Da die Dichtungsanordnung als Bestandteil des Filterelementes bei jedem Elementwechsel automatisch mit gewechselt wird, ist nicht nur die Gefahr vermieden, dass der Einbau des betreffenden Dichtelementes versehentlich vergessen wird, sondern auch die Gefahr vermieden, dass ein falsches Dichtelement eingebaut wird. Um solchen Gefährdungen vorzubeugen, wird bei heute bekannten Lösungen so vorgegangen, dass Austausch-Filterelementen ein O-Ring als zusätzliches Teil beigelegt wird, was zu einer Komplizierung der Logistik führt. Auch ist hierdurch nicht sichergestellt, dass das zusätzliche Teil auch tatsächlich eingebaut wird.

Der Dichtungsträger ist durch ein Umfangsteil gebildet, das bezogen auf die Längsachse von einem zentralen Teil einer Endkappe radial abgesetzt ist, wobei diese Endkappe an dem dem Deckelteil zugeordneten Ende des Filterelementes vorgesehen ist und eine Einfassung für dessen Filtermedium bildet.

Bei bevorzugten Ausführungsbeispielen, bei denen die Dichtungsanordnung einen Ringkörper mit einer inneren, radial einwärts vorspringenden Halterippe aufweist, die in einer umfänglichen Ringnut an dem den Dichtungsträger bildenden Umfangsteil des Filterelementes gesichert ist, ist der abdichtende Ringkörper auf einfach Weise am Dichtungsträger sicher festgelegt.

Eine besonders sichere Halterung der Dichtungsanordnung ist bei Ausführungsbeispielen gewährleistet, bei denen die Dichtungsanordnung eine Profilringdichtung mit einer radial innenliegenden Ausnehmung aufweist, in die ein schwalbenschwanzartiger Außenring des den Dichtungsträger bildenden Umfangsteiles des Filterelementes sichernd eingreift.

Eine besonders sichere Abdichtung ist gewährleistet, wenn eine derartige Profilringdichtung zwei in Axialrichtung einander entgegengesetzte Dichtlippen aufweist, die je einen Abdichtbereich gegenüber dem Deckelteil und dem Gehäuse bilden.

Nachstehend ist die Erfindung anhand der Zeichnung im Einzelnen erläutert. Es zeigen:
- Fig. 1 einen schematisch vereinfacht und gegenüber einer praktischen Ausführungsform in leicht verkleinertem Maßstab gezeichneten Längsschnitt eines Ausführungsbeispieles der erfindungsgemäßen Filtervorrichtung;
- Fig. 2 einen vergrößert gezeichneten Teilschnitt des in Fig. 1 mit X bezeichneten Bereiches;
- Fig. 3 eine gegenüber Fig. 1 stark vergrößert gezeichnete Teilschnittdarstellung, die lediglich den Kopfteil eines zweiten Ausführungsbeispieles zeigt, und
- Fig. 4 einen der Fig. ähnlichen Längsschnitt eines dritten Ausführungsbeispieles.

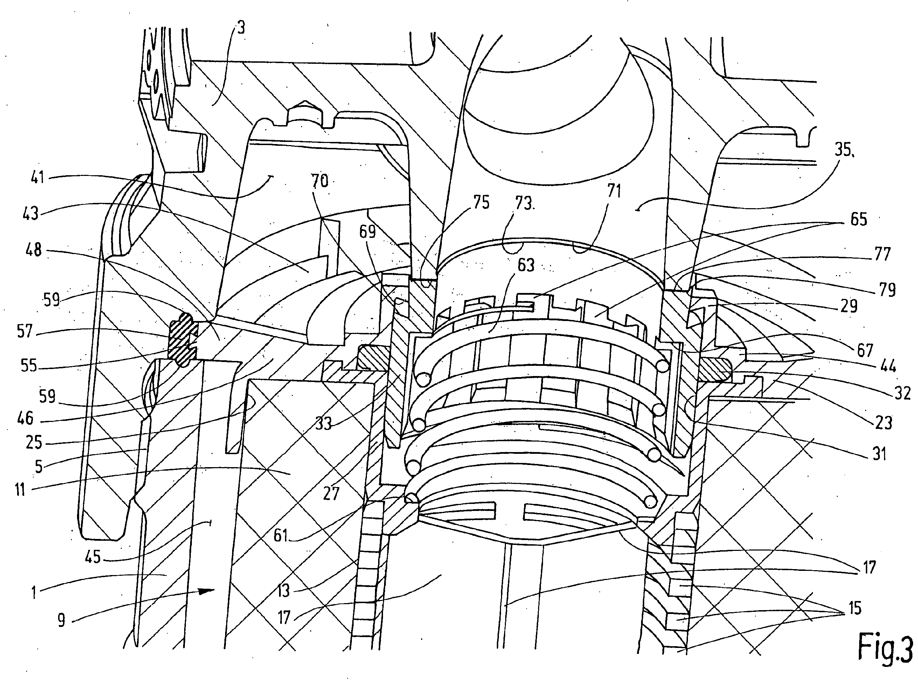

Ein topfartiges, am Boden geschlossenes, im großen Ganzen kreiszylinderförmiges Filtergehäuse 1 ist an seinem oberen Ende durch ein Deckelteil 3 verschließbar, das mit dem Gehäuse 1 über eine Verschraubung 5 lösbar verbindbar ist. Im Gehäuse 1 ist ein Filterelement 9 aufnehmbar, das in üblicher Bauweise ein hohlzylinderförmiges Filtermedium 11, beispielsweise in Form von Filtermattenlagen oder eines mehrlagigen, gefalteten oder plissierten Filterkörpers aufweist, das einen zur Längsachse 2 konzentrischen, rohrförmigen Stützkörper 13 umgibt, der aus Kunststoffmaterial spritzgeformt ist. Dieser weist, wie am deutlichsten aus Fig. 3 ersichtlich ist, eine Aufeinanderfolge von im Abstand voneinander angeordneten, umfänglichen Kreisringen 15 auf, von denen in der Fig. lediglich einige beziffert sind und die in der bei derartigen Stützkörpern 13 üblichen Weise mit einem im Inneren befindlichen Träger verbunden sind, der als im Querschnitt dreiflügeliger Stern mit drei Flügeln 17 gestaltet ist. An dem dem Topfboden des Gehäuses 1 zugeordneten Ende ist das Filterelement 9 durch eine Bodenkappe 19 aus Kunststoffmaterial abgeschlossen, die eine Einfassung 21 für das Filtermedium 11 bildet. An dem entgegengesetzten Ende bildet eine ebenfalls aus Kunststoffmaterial geformte Endkappe 23 den dem Deckelteil 3 zugewandten Abschluß des Filterelementes 9, wobei die Endkappe 23 in ähnlicher Weise wie die Bodenkappe 19 eine Einfassung 25 für das betreffende Ende des Filtermediums 11 bildet.

Wie am deutlichsten der Fig. 3 entnehmbar ist, befindet sich am radial innenliegenden Bereich der Einfassung 25 ein Hohlkörper 27, der zusammen mit einem Fortsatz 29, der am radial innenliegenden Ende der Endkappe 23 axial in Richtung auf das Deckelteil 3 hin vorsteht, eine kreiszylindrische Führung 31 bildet, in der ein Hülsenkörper 33 axial verschiebbar geführt ist, wobei zwischen dem Hohlkörper 27 und dem Fortsatz 29 ein Sitz für ein Dichtelement 32 gebildet ist, das den Hülsenkörper 33 gegenüber der Führung 31 abdichtet. Der Hülsenkörper 33 dient als bewegbares Kupplungsteil einer Anschlußeinrichtung zur Herstellung einer Fluidverbindung zwischen Filterelement 9 und einer Fluidführung 35 im Deckelteil 3.

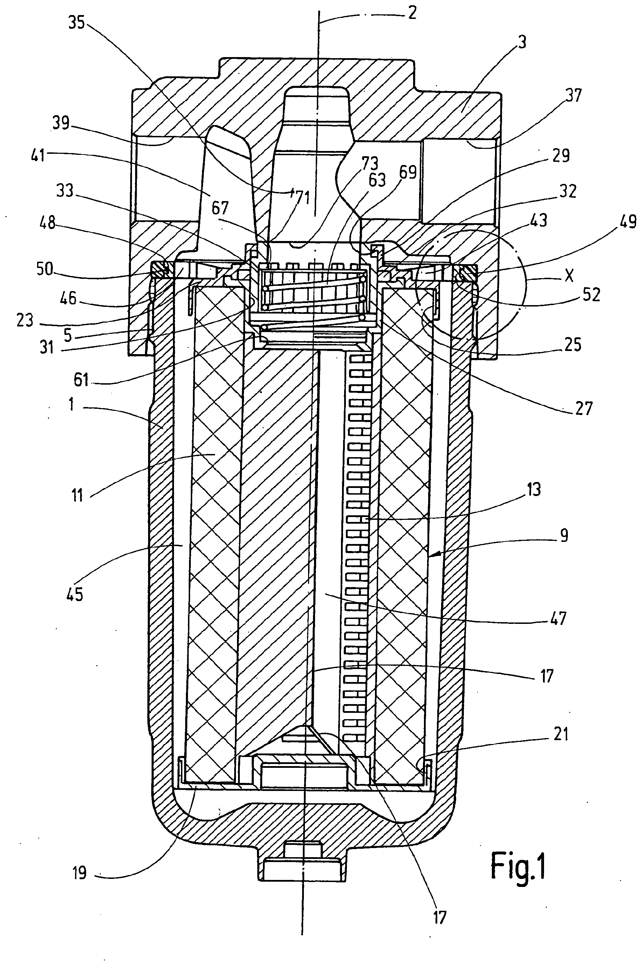

Wie aus Fig. 1 entnehmbar ist, ist die Fluidführung 35 im Deckelteil 3 mit einem Fluidauslass 37 für abgereinigtes Fluid in Verbindung. Ein im Deckelteil 3 hierzu gegenüberliegend angeordneter Fluideinlass 39 für abzureinigendes Fluid steht im Deckelteil 3 mit einer zweiten Flüidführung 41 in Verbindung, von der aus das abzureinigende Fluid über an der Endkappe 23 ausgebildete Einströmöffnungen 43 in den Ringraum 45 einströmbar ist, der an der Außenseite des Filtermediums 11 die Schmutzseite der Filtervorrichtung bildet, von wo aus das zu reinigende Fluid das Filtermedium 11 von außen nach innen passiert und zu dem die Reinseite bildenden inneren Filterhohlraum 47 gelangt. Aus dem inneren Filterhohlraum 47 gelangt das abgereinigte Fluid durch den das Kupplungsteil der Anschlußeinrichtung bildenden Hülsenkörper 33 hindurch zur Fluidführung 35 des Deckelteils 3 und damit zum Fluidauslass 37.

Bei der vorliegenden Erfindung ist die Dichtungsanordnung, die die fluiddichte Abdichtung zwischen Deckelteil 3 und Gehäuse 1 bildet, Bestandteil des Filterelementes 9. Genauer gesagt, ist die Dichtungsanordnung am Filterelement 9 bleibend festgelegt, so dass beim Filterelementwechsel ohne besonderes Zutun des den Wechselvorgang durchführenden Personals automatisch der Austausch der Dichtungsanordnung erfolgt. Bei den vorliegenden Beispielen ist die Dichtungsanordnung jeweils mit der Endkappe 23 fest verbunden, die den Abschluß des Filterelementes an dem dem Deckelteil 3 zugeordneten Ende bildet. Zu diesem Zweck sind an den Zentralbereich 44 der Endkappe 23 Stege 46 einstückig angeformt, und zwar bei den vorliegenden Beispielen sechs Stege 46, die in gleichen Abständen voneinander, bezogen auf die Längsachse 2, radial auskragend über die Einfassung 25 hinaus radial vorstehen und an ihren äußeren Enden mit einem ringförmigen Umfangsteil 48 verbunden sind, das als Dichtungsträger dient, an dem die Dichtungsanordnung bleibend festgelegt ist. Die Zwischenräume zwischen den Stegen 46 bilden an der Außenseite des Zentralbereiches 44 der Endkappe 23 die Einströmöffnungen 43 für den Eintritt des abzureinigenden Fluides in das Filterelement 9.

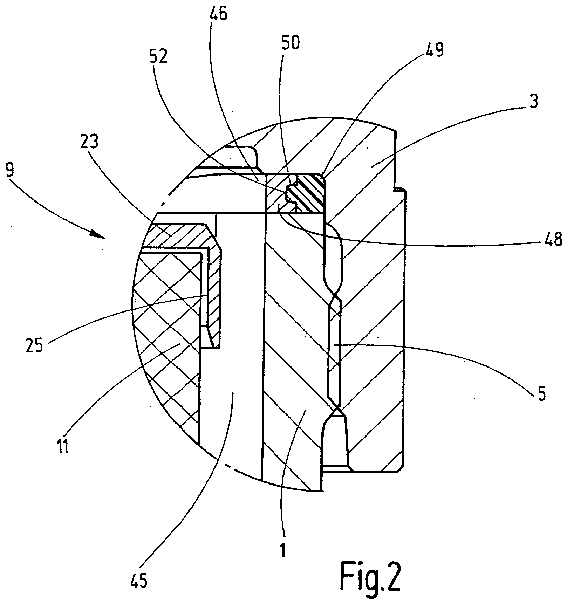

Beim Beispiel von Fig. 1 und 2 ist als Dichtelement der Dichtungsanordnung ein Ringkörper 49 vorgesehen, der, wie am besten aus Fig. 2 zu ersehen ist, eine im großen Ganzen quadratische Querschnittform besitzt, deren axial einander entgegengesetzte Flächen Dichtflächen zur Anlage am Deckelteil 3 und dem Endrand der Öffnung des Gehäuses 1 bilden. Wie ebenfalls aus Fig. 2 deutlich entnehmbar ist, ist der Ringkörper 49 am Umfangsteil 48 in der Weise festgelegt, dass eine vom Ringkörper 49 radial einwärts vorspringende Halterippe 50 in einer umfänglichen Ringnut 52 an dem den Dichtungsträger bildenden Umfangsteil 48 gesichert ist.

Fig. 3 verdeutlicht ein abgewandeltes Ausführungsbeispiel, bei dem die Dichtungsanordnung als Dichtelement eine Profilringdichtung 57 aufweist, die aus der im wesentlichen rechteckförmigen Querschnittsform in Axialrichtung vorspringende, einander entgegengesetzte Dichtlippen 59 aufweist, die jeweils die Abdichtung gegenüber dem Deckelteil 3 und dem Gehäuse 1 bilden. Diese Profilringdichtung 57 ist am den Dichtungsträger bildenden Umfangsteil 48 des Filterelementes 9 derart gesichert, dass ein vom Umfangsteil 48 radial vorspringender Außenring 55 eine schwalbenschwanzförmige Kontur besitzt und in eine an der Profilringdichtung 57 innenliegend ausgebildete, ebenfalls schwalbenschwanzartig geformte Ausnehmung eingreift, siehe Fig. 3.

Bei den Ausführungsbeispielen gemäß Fig. 1 bis 3 ist als bewegliches Kupplungsteil für die Fluidverbindung zwischen dem die Reinseite bildenden Filterhohlraum 47 und der Fluidführung 35 im Deckelteil 3 ein Hülsenkörper 33 innerhalb einer Führung 31 axial verschiebbar geführt. Der Hohlkörper 27, der mit der Endkappe 23 verbunden ist und ein Teil der Führung 31 bildet, weist an seinem inneren Endbereich eine radial nach einwärts vorstehende Gestaltung auf, die eine Anschlagschulter 61 bildet, an der ein Ende einer Schrauben-Druckfeder 63 abgestützt ist, die sich im Inneren des Hülsenkörpers 33, an dessen Innenrippen 65 (lediglich in Fig. 3 einige beziffert) anliegend, mit ihrem anderen Ende an einer inneren Ringschulter 67 des Hülsenkörpers 33 abstützt. Dadurch ergibt sich für den Hülsenkörper 33 eine Federvorspannung für eine in Richtung auf das Deckelteil 3 verlaufende Axialbewegung. Zur Begrenzung dieser Bewegung in einer Endlage befindet sich an dem Fortsatz 29, der Teil der Führung 31 bildet, eine die Führung verengende Stufe 69, die mit einer Stufe 70 am Außenumfang des Hülsenkörpers 33 zur Endlagenbegrenzung zusammenwirkt. Die Fig. 1 und 3, die den Funktionszustand der Filtervorrichtung darstellen, zeigen, dass bei aufgeschraubtem Deckelteil 3 der Hülsenkörper 33 aus der Endlage gegen die Federvorspannung der Druckfeder 63 axial in das Filterelement 9 hinein verschoben ist. Dies rührt davon her, dass der Mündungsrand 71 der deckelseitigen Fluidführung 35 als das feststehende Kupplungsteil der Anschlußeinrichtung zur Bildung der Kupplungsverbindung beim Festschrauben des Deckelteiles 3 auf den Hülsenendrand 73 des Hülsenkörpers 33 drückt und diesen aus der Endlage zurückschiebt, so dass die Federvorspannung der Druckfeder 63 als Dichtkraft zwischen Mündungsrand 71 der Fluidführung 35 und Hülsenendrand 73 des Hülsenkörpers 33 wirksam ist. Mit anderen Worten gesagt wird die Kupplungsverbindung der Anschlußeinrichtung selbsttätig hergestellt, wenn die Vorrichtung durch Aufschrauben des Deckelteiles 3 auf das ein zugehöriges Filterelement 9 enthaltendes Gehäuse 1 in den Funktionszustand gebracht wird.

Die miteinander zusammenwirkenden Bereiche von Hülsenkörper 33 und Fluidführung 35, die im Kupplungszustand die Abdichtung bilden, sind in der Weise gestaltet, dass eine der durch die Federvorspannung aneinander gepreßten Ringflächen eine durchgehende Radialebene bildet, während die andere Ringfläche eine Radialebene mit aus dieser vorspringender Dichtkante bildet. Bei den vorliegenden Ausführungsbeispielen ist die Ringfläche 75 an der Fluidführung 35 durchgehend eben, während die Ringfläche 77 längs ihres Umfangsrandes eine geringfügig vorstehende Dichtkante 79 bildet. Diese bildet mit dem radial außen liegenden Rand der Ringfläche 75 nicht nur in Zusammenwirkung mit deren Flächenrand eine Abdichtung, sondern durch die Randeinfassung des Mündungsrandes 71 der Fluidführung 35 auch eine Zentrierung, durch die beim Aufschrauben des Deckelteiles 3 sichergestellt ist, dass eine äußerst präzise Fluchtung der Kupplungsverbindung der Anschlußeinrichtung zwangsweise erfolgt. In Anbetracht dessen, dass das Filterelement 9, von der Druckfeder 63 abgesehen, metallfrei aufgebaut sein kann, so dass mechanische oder thermische Einflüsse zu geringfügigen Verformungen führen könnten, stellt diese Zentrierung einen äußerst vorteilhaften Beitrag zur Betriebssicherheit der Vorrichtung dar.

Bei der beschriebenen Bauweise der Kupplungsvorrichtung bildet der federbelastete Hülsenkörper 33 auch den bewegbaren Ventilkörper eines Bypassventiles. Bei einem Ansteigen des Differenzdruckes, d. h. wenn die Druckdifferenz zwischen dem Raum zwischen den Stufen 69 und 70 am Fortsatz 39 bzw. dem Hülsenkörper 33 und dem inneren Filterhohlraum 47 auf einen Schwellenwert ansteigt, bewegt sich der Hülsenkörper 33 gegen die Kraft der Feder 63, so dass sich zwischen der Ringfläche 75 am Hülsenendrand 73 und dem Mündungsrand 71 ein Abstand zwischen den Ringflächen 75 und 77 ergibt, also eine unmittelbare Verbindung zwischen der Fluidführung 41 und der Fluidführung 35 im Deckelteil 3 zustande kommt.

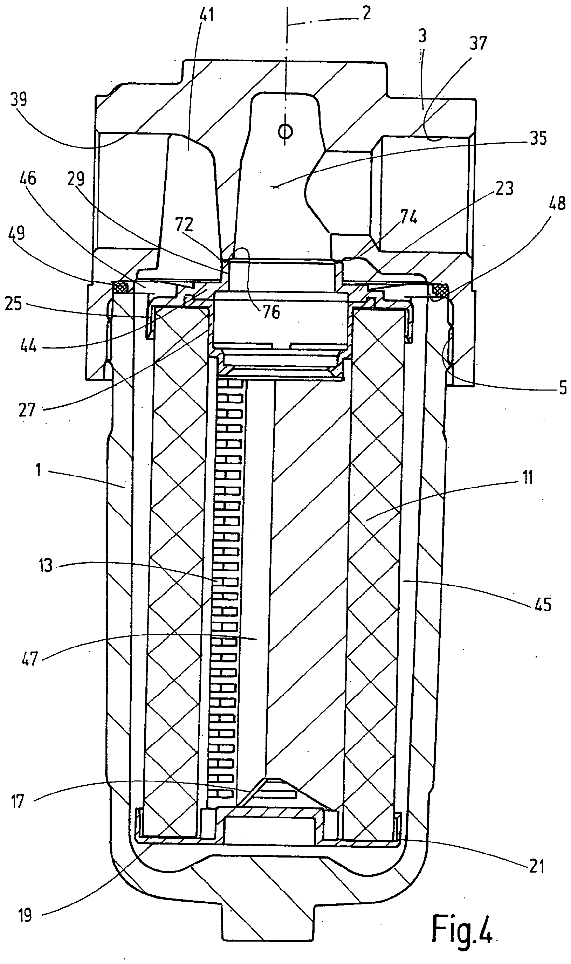

Die Fig. 4 verdeutlicht ein weiteres Ausführungsbeispiel ohne darin integriertes Bypassventil. Während bei den zuvor beschriebenen Ausführungsbeispielen die Fluidverbindung zwischen dem die Reinseite bildenden Filterhohlraum 47 und der Fluidführung 35 im Deckelteil 3 über ein axial bewegliches Kupplungsteil erfolgt, das durch einen Hülsenkörper 33 gebildet ist, der im zentralen Teil 44 der Endkappe 23 axial verschiebbar geführt ist, bildet beim Beispiel von Fig. 4 der axiale Fortsatz 29 der Endkappe 23 die endseitige Dichtfläche, d. h. der Mündungsrand 72 des Fortsatzes 29 übernimmt die Funktion des Hülsenendrandes 73 des Hülsenkörpers 33 der zuvor beschriebenen Ausführungsbeispiele. Dementsprechend weist der Endrand des Fortsatzes 29 endseitig eine Ringfläche 76 auf, die entsprechend der Ringfläche 77 bei den zuvor beschriebenen Beispielen nicht durchgehend eben ist, sondern längs ihres Umfangsrandes eine geringfügig vorstehende Dichtkante 79 bildet. Diese wirkt mit der Ringfläche 74 abdichtend zusammen, die am Mündungsrand der Fluidführung 35 durchgehend eben ausgebildet ist. Bei aufgeschraubtem Deckelteil 3 ist somit durch Zusammenwirkung der Ringflächen 74 und 76 sowie der vorstehenden Dichtkante 79 (letztere in Fig. 4 nicht gezeigt) die Abdichtung an der Fluidverbindung gebildet. Im übrigen entspricht das Ausführungsbeispiel von Fig.4, insbesondere was die ein Bestandteil des Filterelementes 9 bildende Dichtungsanordnung betrifft, den zuvor beschriebenen Beispielen.

## Patentansprüche

1. Filterelement (9), das einen sich entlang einer Längsachse (2) erstreckenden Körper bildet und in einem Gehäuse (1) einer Filtervorrichtung aufnehmbar ist, das mittels eines Deckelteiles (3) der Filtervorrichtung verschließbar ist, wobei eine Dichtungsanordnung (49, 57) zur Bildung einer fluiddichten Abdichtung zwischen Gehäuse (1) und Deckelteil (3) vorgesehen ist, wobei die Dichtungsanordnung (49, 57) als Bestandteil des Filterelementes (9) an einem mit diesem fest verbundenen Dichtungsträger (48) festgelegt ist, wobei der Dichtungsträger durch einen Umfangsteil (48) derjenigen Endkappe (23) gebildet ist, die an dem dem Deckelteil (3) zugeordneten Ende des Filterelementes (9) eine Einfassung für dessen Filtermedium (11) bildet, und wobei die Endkappe (23) Fluiddurchlässe (43) zwischen einer Fluidführung (41) im Deckelteil (3) und der Außenseite des Filterelements (9) aufweist, **dadurch gekennzeichnet, dass** der den Dichtungsträger bildende, bezogen auf die Längsachse (2) radial vom zentralen Teil (44) der Endkappe (23) abgesetzte ringförmige Umfangsteil (48) über radial verlaufende Stege (46) mit dem zentralen Teil (44) der Endkappe (23) verbunden ist, dass die radial verlaufenden Stege (46) an den zentralen Teil (44) der Endkappe (23) einstückig angeformt sind, und dass die Zwischenräume zwischen den Stegen (46) im Betriebszustand der Vorrichtung die Fluiddurchlässe (43) bilden.

2. Filterelement nach Anspruch 1, **dadurch gekennzeichnet, dass** die Dichtungsanordnung einen Ringkörper (49) mit einer inneren, radial einwärts vorspringenden Halterippe (50) aufweist, die in einer umfänglichen Ringnut (52) an dem den Dichtungsträger bildenden Umfangsteil (48) des Filterelementes (9) gesichert ist.

3. Filterelement nach Anspruch 1, **dadurch gekennzeichnet, dass** die Dichtungsanordnung eine Profilringdichtung (57) mit einer radial innenliegenden Ausnehmung aufweist, in die ein schwalbenschwanzartiger Außenring (55) des den Dichtungsträger bildenden Umfangsteiles (48) des Filterelementes (9) sichernd eingreift.

4. Filterelement nach Anspruch 3, **dadurch gekennzeichnet, dass** die Profilringdichtung (57) zwei in Axialrichtung einander entgegengesetzte Lippen (59) aufweist, die je einen Abdichtbereich gegenüber dem Deckelteil (3) und dem Gehäuse (1) bilden.

5. Filtervorrichtung mit einem Gehäuse (1), das mittels eines Deckelteiles (3) verschließbar ist und mit einem Filterelement (9) nach einem der Ansprüche 1 bis 4, wobei die Dichtungsanordnung (49, 57) des Filterelements (9) zur Bildung einer fluiddichten Abdichtung zwischen Gehäuse (1) und Deckelteil (3) vorgesehen ist.

## Claims

1. A filter element (9) which forms a body extending along a longitudinal axis (2) and which can be received in a housing (1) of a filter device that can be closed by means of a cover part (3) of the filter device, a sealing arrangement (49, 57) being provided to form fluid-tight sealing between the housing (1) and the cover part (3), the sealing arrangement (49, 57), as a component of the filter element (9), being fixed on a seal carrier (48) which is securely connected to it, the seal carrier being formed by a peripheral part (48) of the end cap (23) which forms an enclosure for its filter medium (11) on the end of the filter element (9) which is associated with the cover part (3), and the end cap (23) having fluid passages (43) between a fluid duct (41) in the cover part (3) and the outside of the filter element (9), **characterised in that** the annular peripheral part (48) forming the seal carrier, and which is radially offset from the central part (44) of the end cap (23) in relation to the longitudinal axis (2), is connected to the central part (44) of the end cap (23) by radially running crosspieces (46), that the radially running crosspieces (46) are moulded in one piece onto the central part (44) of the end cap (23), and that the intermediate spaces between the crosspieces (46) form the fluid passages (43) in the operating state of the device.

2. The filter element according to Claim 1, **characterised in that** the sealing arrangement has an annular body (49) with an inner retaining rib (50) which projects radially inward and which is secured in a peripheral annular groove (52) on the peripheral part (48) of the filter element (9) that forms the seal carrier.

3. The filter element according to Claim 1, **characterised in that** the sealing arrangement has a profile ring seal (57) with a radially inner recess which is securely engaged by a dovetail-shaped outer ring (55) of the peripheral part (48) of the filter element (9) that forms the seal carrier.

4. The filter element according to Claim 3, **characterised in that** the profile ring seal (57) has two lips (59) which are opposite one another in the axial direction and which each form one sealing region relative to the cover part (3) and the housing (1).

5. A filter device with a housing (1) that can be closed by means of a cover part (3) and having a filter element (9) according to any of Claims 1 to 4, the sealing arrangement (49, 57) of the filter element (9) being provided to form fluid-tight sealing between the housing (1) and the cover part (3).

## Revendications

1. Elément (9) filtrant, qui forme un corps s'étendant suivant un axe (2) longitudinal et qui peut être reçu dans une enveloppe (1) d'un dispositif de filtration, laquelle peut être fermée au moyen d'une partie (3) formant couvercle du dispositif de filtration, un agencement (49, 57) d'étanchéité étant prévu pour former une étanchéité, de manière étanche au fluide, entre l'enveloppe (1) et la partie (3) formant couvercle, l'agencement (49, 57) d'étanchéité étant, en tant que partie constitutive de l'élément (9) filtrant, fixé à un support (48) d'étanchéité, qui y est relié fixement, le support d'étanchéité étant formé par une partie (48) périphérique de la coiffe (23) d'extrémité, qui forme, à l'extrémité, associée à la partie (3) formant couvercle, de l'élément (9) filtrant, une bordure pour son milieu (11) filtrant, et dans lequel la coiffe (23) d'extrémité a des passages (43) pour du fluide, entre une conduite (41) pour du fluide dans la partie (3) formant couvercle et le côté extérieur de l'élément (9) filtrant, **caractérisé en ce que** la partie (48) périphérique annulaire, formant le support d'étanchéité, éloignée, rapporté à l'axe (2) longitudinal, radialement de la partie (44) centrale de la coiffe (23) d'extrémité, est reliée par des nervures (46) s'étendant radialement à la partie (44) centrale de la coiffe (23) d'extrémité, **en ce que** les nervures (46) s'étendant radialement sont formées d'une seule pièce avec la partie (44) centrale de la coiffe (23) d'extrémité, et **en ce que** les espaces intermédiaires entre les nervures (46) forment, dans l'état de fonctionnement du dispositif, les passages (43) pour du fluide.

2. Elément filtrant suivant la revendication 1, **caractérisé en ce que** l'agencement d'étanchéité a un corps (49) annulaire, ayant une nervure (50) intérieure de maintien faisant saillie radialement vers l'intérieur, qui fixe la partie (48) périphérique, formant le support d'étanchéité, de l'élément (9) filtrant dans une rainure (52) annulaire faisant le tour.

3. Elément filtrant suivant la revendication 1, **caractérisé en ce que** l'agencement d'étanchéité a une étanchéité (57) annulaire profilée ayant un évidement se trouvant vers l'intérieur radialement, dans lequel une bague (55) extérieure, en queue d'aronde, de la partie (48) périphérique formant le support d'étanchéité de l'élément (9) filtrant, pénètre avec fixation.

4. Elément filtrant suivant la revendication 3, **caractérisé en ce que** l'étanchéité (57) annulaire profilée a deux lèvres (59) opposées l'une à l'autre dans la direction axiale, qui forment respectivement une région d'étanchéité par rapport à la partie (3) formant couvercle et à l'enveloppe (1).

5. Dispositif de filtration comprenant une enveloppe (1), qui peut être fermée au moyen d'une partie (3) formant couvercle et ayant un élément (9) filtrant suivant l'une des revendications 1 à 4, dans lequel l'agencement (49, 57) d'étanchéité de l'élément (9) filtrant est prévu pour former une étanchéité étanche au fluide entre l'enveloppe (1) et la partie (3) formant couvercle.
